# EUROPÄISCHE PATENTSCHRIFT

(11) **EP 3 463 748 B1**
(45) Veröffentlichungstag und Bekanntmachung des Hinweises auf die Patenterteilung: **29.07.2020**
(21) Anmeldenummer: 17727583.1
(22) Anmeldetag: 02.06.2017
(51) Int. Cl.: B23Q 17/22, B23B 49/02, B25H 1/00, G01B 7/31, G05B 19/402

(54) **AUSRICHTUNGSVORRICHTUNG FÜR DREHWERKZEUGE**
ORIENTING APPARATUS FOR TURNING TOOLS
DISPOSITIF D'ALIGNEMENT POUR OUTILS ROTATIFS

(30) Priorität: 02.06.2016 DE 102016110196
(43) Veröffentlichungstag der Anmeldung: 10.04.2019
(73) Patentinhaber: Gühring KG, 72458 Albstadt (DE)
(72) Erfinder: REBHOLZ, Felix, 72510 Stetten-Frohnstetten (DE)
(74) Vertreter: Gleim, Christian Ragnar
(86) Internationale Anmeldenummer: PCT/EP2017/063536
(87) Internationale Veröffentlichungsnummer: WO 2017/207792

(56) Entgegenhaltungen:
- EP-A1- 2 604 366
- DE-A1-102013 100 130
- FR-A1- 2 679 474
- US-A- 3 572 181

## Beschreibung

Die vorliegende Erfindung betrifft eine Ausrichtungsvorrichtung zur Anordnung an einem Drehwerkzeug, insbesondere an einem Werkzeugschaft, zum Ausrichten einer einzubringenden Bohrung oder Senkung.

### STAND DER TECHNIK

Aus dem Stand der Technik sind Ausrichtungsvorrichtungen bzw. Justiervorrichtungen bekannt. Diese werden als Bohrvorlage oder Bohrhilfe verwendet. Meist kann mit den aus dem Stand der Technik bekannten Dreifüßen oder Ähnlichem nicht festgestellt werden, ob die Ausrichtungsvorrichtung in der gewünschten Lage über den kompletten Arbeitsvorgang auf dem Werkstück aufliegt.

Daneben zeigt die DE 10 2013 100 130 A1 eine Vorrichtung mit einem Dreifuß mit Auflagekontrolle zur Bearbeitung durch ein Werkzeug. Die Auflagekontrolle erfolgt durch einen oder mehrere Messwertaufnehmer, der bzw. die die Messwerte der Auflage oder Nicht-Auflage von Füßen des Dreifußes wiedergibt. Als Anzeige für ein Messergebnis jedes Messwertaufnehmers dient ein akustisches oder visuelles Signal. Dabei wird jedem Signal jedes Messwertaufnehmers ein Anzeigewert zugeordnet. So sind bei drei Füßen drei Signale vorgesehen, die jeweils unabhängig voneinander die Auflage eines Fußes anzeigt. Der Messwertaufnehmer gibt für jede Auflage bzw. Nicht-Auflage eines Fußes ein gesondertes Signal aus. Für eine Ausrichtung muss ein Werker die Signalgebung aller Signale beachten, und eine erhöhte Aufmerksamkeit für ein korrektes Ausrichtung aufbringen. In der vorbekannten Vorrichtung sind somit mehrere unabhängige Messaufnehmer zur Bestimmung der Lage des Dreifußes angeordnet, wobei mehrere Kontrollsignale, jeweils ein Kontrollsignal pro Fuß des Dreifußes, ausgegeben werden, die alle parallel von einem Werker beachtet werden müssen. Dies macht eine Ausrichtung mühsam, da eine Vielzahl von Signalen gleichzeitig beobachtet werden müssen, und sich dadurch eine erhöhte Ausrichtzeit und ein mühsameres Bearbeiten ergibt. US 3 572 181 A offenbart eine Ausrichtungsvorrichtung nach dem Oberbegriff des Anspruchs 1.

Insbesondere im Fahrzeug-, Schiffs- und Flugzeugbau ist eine exakte Ausrichtung von Drehbearbeitungsvorgängen aufgrund einer makellosen und stromlinienförmigen Gestaltung einer Werkstückoberfläche von hoher Bedeutung.

Aus dem Stand der Technik ergibt sich somit das Problem, dass eine korrekte Ausrichtung eines Bohrvorgangs nur durch eine hohe Aufmerksamkeit bei Betrachtung der Signale einer bekannten Ausrichtvorrichtung erreicht werden kann. Die Ausrichtung des Drehwerkzeugs gegenüber dem Werkstück ist bei einer unvollständigen oder falschen Interpretation der Anzeige nicht sichergestellt. Ebenso zeigt sich, dass bekannten Anzeigemethoden technisch aufwändig sind und den Einbau mehrerer Messwertaufnehmer mit separaten Anzeigemechanismen oder Ähnlichem erfordert. So sind beim Einsatz von einem Dreifuß mit drei Füßen drei Messwertaufnehmer erforderlich.

Somit ist es Aufgabe der Erfindung, eine Ausrichtungsvorrichtung vorzuschlagen, welche die oben dargestellten Probleme des Stands der Technik lösen kann und eine vereinfachte Ausrichtung mit geringer Fehlausrichtungswahrscheinlichkeit und höherer Bearbeitungszeit mit sich bringt.

Die vorgenannte Aufgabe wird durch eine Ausrichtungsvorrichtung nach dem unabhängigen Anspruch sowie nach dem erfindungsgemäßen Verfahren gelöst. Vorteilhafte Ausbildungen sind Gegenstand der Unteransprüche.

### OFFENBARUNG DER ERFINDUNG

Gegenstand der Erfindung ist eine Ausrichtungsvorrichtung zur Anordnung an einem Drehwerkzeug, insbesondere an einem Werkzeugschaft oder einer Werkzeugspitze eines Dreh-, Fräs-, Reib- oder Senkwerkzeugs, zum Ausrichten einer einzubringenden Bohrung oder Senkung oder zum Ausrichten eines Nachbearbeitungsschrittes gegenüber einer Normalen der Oberfläche eines Werkstücks. Die Ausrichtungsvorrichtung umfasst einen Grundkörper mit einem Durchgangsloch zur Aufnahme des Werkzeugschafts oder der Werkzeugspitze in einer Ausrichtungsrichtung und mindestens zwei, bevorzugt mindestens drei Tastelemente zur ausgerichteten Auflage auf der Oberfläche des Werkstücks.

Es wird vorgeschlagen, dass durch eine Ausrichtbewegung der Ausrichtungsvorrichtung bezüglich der Normalen der Oberfläche des Werkstücks alle Tastelemente einen Stromkreis zwischen einer im Grundkörper umfassten elektrischen Stromquelle und der Signaleinrichtung durch eine von den Tastelementen aktivierten Reihenschaltung schließen, um durch den geschlossenen Stromkreis die Signaleinrichtung zu aktivieren. Durch den mechanischen Kontakt der Tastelemente mit der Oberfläche eines Werkstücks oder einer sonstigen Oberfläche wird ein Stromkreis mittels Reihenschaltung geschlossen, wodurch eine Signaleinrichtung erst bei Kontaktierung aller Tastelemente aktiviert wird und ein Ausrichtsignal abgibt. Bei der Ausführung der Ausrichtvorrichtung mit drei Tastern kann eine orthogonale Ausrichtung der Ausrichtvorrichtung und damit des Drehwerkzeugs festgestellt werden. Es lässt sich ein elektrisch einfacher Schaltkreis ohne elektronische Zusatzelemente einsetzen. Somit wird bei mechanischem Kontakt aller Tastelemente mit der Oberfläche des Werkstücks eine gemeinsame einzelne Signaleinrichtung aktiviert und ein einzelnes Ausrichtsignal ausgegeben wird.

Mit anderen Worten wird eine Ausrichtungsvorrichtung bzw. Justiervorrichtung als Bohrhilfe vorgeschlagen, die durch einfachen mechanischen Kontakt aller Tastelementen bzw. Füßen mit der Oberfläche eines Werkstücks eine Signaleinrichtung aktiviert, wodurch angegeben wird, dass sich das Drehwerkzeug in der gewünschten Position befindet. Durch die Ausbildung separater Tastelemente anstatt einer großflächigen Auflagefläche kann der Bereich um die zu bearbeitende Stelle an der Oberfläche eines Werkstücks frei bleiben, wodurch Späne oder Kühlmittel besser abgeführt werden können. Weiterhin kann eine Übermittlung der Daten an einen Computer bereitgestellt werden, die der Qualitätskontrolle dient. Durch die Aktivierung der Signaleinrichtung über mechanischen Kontakt der Tastelemente mit einer Oberfläche ist keine Verwendung von Messaufnehmern oder sonstigen Wegmessern erforderlich. Dadurch kann eine kostengünstige sowie einfach herstellbare Ausrichtvorrichtung bereitgestellt werden. Soll die Bohrung oder Ähnliches lediglich in einer Richtung austariert werden, kann die Ausrichtvorrichtung nur mit zwei Tastelementen ausgeführt werden. Für die Ausrichtung in zwei Raumrichtungen ist die Ausführung mit drei oder mehreren Tastelementen vorteilhaft. Die Dritte Raumrichtung, d.h. die Höhe, in der das Drehwerkzeug angesetzt wird, bestimmt sich durch die lichte Bearbeitungshöhe über der Oberfläche des Werkstücks und der Tiefe des Bearbeitungsabschnitts. Mit einer derartigen Ausrichtungsvorrichtung ist die Bestimmung einer Arbeitsposition in einer orthogonalen Richtung zu einer Tangente auf einer Oberfläche eines Werkstücks, d.h. Normalen zur Werkstückoberfläche möglich. Dies erlaubt die Ausrichtung des Drehwerkzeugs auf ebenen und gekrümmten Oberflächen. Ebenso können mehr als drei Tastelemente eingesetzt werden. Durch eine Längenveränderung der Tastelemente oder Verstellung des Kontaktpunktes der Tastelemente, d.h. der relativen Schaltposition, bei dem beim Aufsetzen der Tastelemente und Einfahren der Tastelemente in den Grundkörper ein elektrischer Schalter geschlossen wird, können auch Winkelabweichungen von der Normalen und somit vorgegebene Schrägwinkel zur Bearbeitung eingestellt werden.

Es ist vorteilhaft, wenn alle Tastelemente einen definierten Schaltpunkt haben, der gleichzeitig Anschlagspunkt der Tastelemente ist. Denn die Tastelemente sind zunächst in Ihrer Länge zumindest geringfügig verschieblich, bei mechanischem Kontakt mit der Oberfläche des Werkstücks verschieben sich diese geringfügig in den Grundkörper und schließen ab einem definierbaren Anpressdruck als Schalter die Reihenschaltung, wobei auch ein stärkerer Anpressdruck keine Veränderung des Anschlagpunktes bzw. der Länge der Tastelemente gegenüber dem Grundkörpers bewirkt. So kommt beim Aufsetzen der Ausrichtvorrichtung auf der Werkstückoberfläche zumindest ein erstes Tastelement in mechanischem Kontakt mit der Werkstückoberfläche. Dabei taucht das Tastelement geringfügig in den Grundkörper ein, und bewirkt bei der maximalen Eintauchtiefe - dem Anschlagspunkt - eine leitfähige Verbindung des Schalters als Schaltpunkt. Bei Erreichen des Schaltpunktes ist geleichzeitig der Anschlagspunkt, d.h. die maximale Eintauchtiefe des Tastelements in den Grundkörper, die vorteilhafterweise einstellbar ist, um Ausrichtpositionen einstellen zu können, erreicht. Wird hiernach das zweite, dritte oder weitere Tastelemente aufgesetzt, so kann bei einer hohen Anpresskraft alle Schaltpunkte aktiviert werden, so dass ein einzelnes Ausrichtsignal ausgegeben wird. Auch eine Erhöhung des Anpressdrucks verändert nicht die relative Lage des Grundkörpers zu den Tastelementen. Es ist beim Erreichen des Schaltpunktes keine Nachgiebigkeit des Anschlagspunktes gegeben. Somit ist eine exakte Ausrichtung möglich, dadurch, dass bei genügend hohem Anpressdruck alle Tastelemente auf der Werkstückoberfläche aufsitzen und ein Ausgangssignal durch die Signaleinrichtung ausgegeben wird.

Erfindungsgemäß ist ein elektrischer Schaltpunkt und somit der Anschlagspunkt zumindest eines Tastelements in Auflagerichtung hin zur Oberfläche des Werkstücks relativ zur Oberfläche des Werkstücks mittels einer Kontaktjustierschraube verschraubbar oder verschiebbar und damit lageverstellbar, so dass die Ausrichtungsrichtung bezüglich der Normalen einer Oberfläche eines Werkstücks einstellbar ist. Hierdurch kann der Schaltpunkt, d.h. die Relativstellung von Testelement zum Grundkörper, bei der ein elektrischer Kontakt durch das jeweilige Tastelement ausgelöst wird, eingestellt werden, wobei gleichzeitig der Anschlagspunkt, d.h. die maximale Eintauchtiefe des Tastelements in den Grundkörper eingestellt ist. Hierdurch ist es sehr einfach, eine Ausrichtung zur Normalen der Werkstückoberfläche einzustellen. Ist der Schaltpunkt für jedes Tastenelement gleich eingestellt, wird eine Ausrichtung entlang der Normalen erreicht. Sind die Schaltpunkte verschieden eingestellt, ergibt sich eine jeweilige Winkel- und Richtungseinstellbare Abweichung zur Normalen, so dass auch Schrägbearbeitungen bzgl. der Werkstückoberfläche eingestellt werden können. Es ist somit nicht nötig, einen hohen Druck auf die Oberfläche des Werkstücks mit der Ausrichtvorrichtung auszuüben, um sicher zu stellen, dass die die Vorrichtung vollständig aufliegt. Durch die Kontaktjustierschraube kann der Schaltpunkt derart sensibel eingestellt werden, dass bereit bei leichtem Kontakt der Ausrichtvorrichtung mit der Oberfläche des Werkstücks die Signaleinrichtung aktiviert wird. Die Kontaktjustierschraube ist dafür bevorzugt in einer Richtung parallel zur Richtung des eingeführten Werkzeugschafts verschieblich und einstellbar.

In einer vorteilhaften Ausführungsform kann zumindest ein mit zumindest einem Tastelement mechanisch kontaktierbares Federkontaktblech über die Kontaktjustierschraube mit einem Schraubenkontaktblech elektrisch kontaktierbar sein. Das Federkontaktblech kann sich derart deformieren, dass im Ausgangszustand kein Kontakt zwischen Federkontaktblech und Kontaktjustierschraube vorhanden ist, während bei Auflage der Ausrichtungsvorrichtung auf eine Oberfläche und bei Kontakt der Taster mit der Oberfläche die Verschiebung der Taster eine Deformation des Federkontaktblechs erzeugen können, sodass ein Kontakt zwischen Federkontaktblech und Kontaktjustierschraube herbeigeführt wird. Der relative Abstand der Kontaktjustierschraube vom Federelement bestimmt die Lage des Schaltpunktes. Durch eine axiale Verstellung der Kontaktjustierungsschraube, entweder mittels Schraub- oder axiale Schiebebewegung kann der Schaltpunkt hochgenau eingestellt und somit die Bearbeitungsrichtung eingestellt werden. Der Ausgangszustand beschreibt hier den Zustand vor dem Aufsetzen der Ausrichtungsvorrichtung auf einer Oberfläche.

In einer vorteilhaften Ausführungsform kann die Kontaktjustierschraube von der Oberseite des Grundkörpers zugänglich und einstellbar und in Ausrichtungsrichtung im Grundkörper angeordnet sein. Hierdurch kann bereits bei Auflage und Anpressung der Tastelemente der Ausrichtungsvorrichtung auf der Werkstückoberfläche durch Verstellen der axialen Lage der Kontaktjustierschrauben eine Einstellung der Bearbeitungsrichtung vorgenommen werden, ohne dass für eine Verstellung die Ausrichtungsvorrichtung vom Werkstück abgenommen werden muss.

In einer vorteilhaften Ausführungsform können zumindest zwei Kontaktjustierschrauben über ein gemeinsames Federkontaktblech elektrisch verbindbar sein und zumindest zwei Kontaktjustierschrauben über ein Schraubenkontaktblech elektrisch miteinander verbunden sein. Durch die elektrische Verbindung zwischen mindestens zwei Kontaktjustierschrauben kann eine elektrische Reihenverbindung der einzelnen Kontaktpunkte, an denen die Tastelemente einen mechanischen Kontakt herstellen, sehr einfach mit einer minimalen Bauteilzahl erreicht werden, wodurch ein geschlossener Stromkreis erzielt wird.

In einer vorteilhaften Ausführungsform kann das mindestens eine Federkontaktblech parallel zu dem mindestens einen Schraubenkontaktblech im Grundkörper angeordnet sein, wobei das Schraubenkontaktblech mit dem Federkontaktblech über mindestens ein Kontaktjustierschraube durch eine, durch das Tastelement ausgelöste, Federbewegung elektrisch kontaktierbar sein. Somit können Federkontaktbleich und Schraubenkontaktbleich bezogen auf eine Werkstückoberfläche parallel und übereinander angeordnet werden, wobei die Kontaktjustierungschraube axial in Richtung der Werkstückoberfläche ausgerichtet sind, und den Schaltpunkt einstellen. Ein Stromfluß kommt über das Schraubenkontaktbleich, die Kontaktjustierschraube und beim Verbiegen des Federkontaktbleich durch das Tastelement beim Berühren des Federkontaktblechs mit der Kontaktjustierschraube zustande. Somit wird ein mechanisch einfacher und robuster Aufbau erreicht. Das Federkontaktblech und das Schraubenkontaktblech können unterschiedlich oder baugleich ausgebildet sein. Ebenso können diese aus dem gleichen Material bestehen. Es können auch mehrere Federkontaktbleche und mehrere Schraubenkontaktbleche vorhanden sein, wobei diese ebenso baugleich ausgeführt sein können. Bevorzugt wird über die Geometrie der Federkontaktbleche und Schraubenkontaktbleche der Verlauf des Stromflusses innerhalb der Ausrichtungsvorrichtung bestimmt.

In einer vorteilhaften Ausführungsform kann die elektrische Stromquelle und / oder die Signaleinrichtung in elektrischem Kontakt mit dem mindestens einen Federkontaktblech und / oder mindestens einem Schraubenkontaktblech stehen. Die Signaleinrichtung kann weiterhin mit einem Kontakt der Stromquelle verbunden sein. Es wird ein Reihenschaltkreis vorgeschlagen, mit einer minimalen elektrischen Leitungsführung und einem robusten und einfachem Aufbau mit einer Minimalzahl elektrischer Verbindungen. Somit kann lediglich durch einen mechanischen Kontakt aller Tastelemente mit der Oberfläche des Werkstücks, wodurch über das mindestens eine Federkontaktblech und / oder mindestens eine Schraubenkontaktblech ein Stromkreis geschlossen wird, ein Ausrichtungssignal aktiviert werden.

In einer vorteilhaften Ausführungsform kann das mindestens eine Schraubenkontaktblech Bohrungen aufweisen, in welche die Kontaktjustierschraube einsteckbar, einlötbar oder einschraubbar ist, wodurch eine permanentleitende Verbindung zwischen dem Schraubenkontaktblech und der Kontaktjustierschraube hergestellt wird. Dabei stellen die Bereiche, in denen durch eine Bewegung der Tastelemente ein mechanischer Kontakt zwischen dem Federkontaktblech und der jeweiligen Kontaktjustierschraube hergestellt werden kann, die einzigen Bereiche das, die eine Unterbrechung oder ein Komplettieren des Stromkreises bewirken können. Dadurch, dass die Schraubenkontaktbleche elektrisch leitend fest mit den Kontaktjustierschrauben verbunden sind, werden die beweglichen Stellen in der Ausrichtungsvorrichtung minimiert und die elektrische Robustheit erhöht, wodurch die Funktionsfähigkeit optimiert wird.

In einer vorteilhaften Ausführungsform kann zumindest eine Kontaktjustierschraube über eine Arretierschraube lagegesichert werden. Damit kann die Sensibilität des Kontaktpunktes mit einer hohen Genauigkeit eingestellt werden und ein unbeabsichtigtes Verstellen der Ausrichtungseinstellung verhindert werden. Werden alle Kontaktjustierschrauben, bevorzugt alle drei Kontaktjustierschrauben, mit jeweils einer Arretierschraube fixiert, kann die Lage bezüglich einer Normalen zur Oberfläche eines Werkstücks mit einer hohen Genauigkeit eingestellt werden. Die Arretierschraube kann radial an der Kontaktjustierschraube ansetzen, um eine Lageveränderung zu verhindern. Die Arretierschraube kann vom Außenumfang des Grundkörpers zugänglich sein, und vor einer Änderung der Ausrichtung durch die Kontaktjustierschraube gelöst werden. Die Einbringung von Bohrungen oder Senkungen mit einer geringen Fehlertoleranz bezüglich der Ausrichtungsrichtung kann dadurch erzielt werden.

In einer vorteilhaften Ausführungsform können die mindestens zwei Tastelemente, bevorzugt mindestens drei Tastelemente die gleiche Länge L aufweisen. Hierdurch erhöht sich die Anzahl der Gleichelemente und eine Ausrichtung entlang der der Normalen einer Werkstückoberfläche wird vereinfacht. Damit kann eine optimale Ausrichtung der Bohrung oder der Senkung in einem Werkstück erzielt werden.

In einer vorteilhaften Ausführungsform kann der Grundkörper kreiszylinderförmig oder teilkreiszylinderförmig ausgebildet sein. Durch unterschiedliche Geometrien des Querschnitts des Grundkörpers kann der minimale Abstand der Tastelemente zum Rand des Grundelements festgelegt werden. Dadurch bestimmt sich auch der minimale Abstand zu einer Begrenzungswand oder einem weiteren Werkstückelement, das in einem Winkel zu der Oberfläche angeordnet ist, auf der die Ausrichtungsvorrichtung mit den Tastelementen aufgesetzt werden soll. Somit wird dadurch ebenfalls der Abstand einer Bohrung, Senkung oder Ähnlichem zu einer Begrenzungswand des Werkstücks minimiert werden, da der Grundkörper in einem minimalen Abstand mit der Begrenzungswand in Kontakt tritt. Um möglichst nahe an einer derartigen Begrenzung eine Bohrung oder Drehbearbeitung ausgerichtet einbringen zu könnten, kann der Grundkörper an einer Seite abgeflacht oder mit einer speziellen Querschnittsgeometrie ausgestaltet sein, um formkomplementär zur Oberflächengeometrie des Werkstücks eine Ausrichtung bereitzustellen. Die Geometrie des Grundkörpers kann ebenso zur Ausrichtung der Bohrung oder Senkung dienen, wenn der Grundkörper an einer oder an mehreren Seiten mit einer Begrenzungswand oder einem weiteren Werkstückelement in Kontakt tritt. Gerade bei komplexen Werkstückgeometrien ist eine Anpassung der Grundkörpergeometrie vorteilhaft.

In einer vorteilhaften Ausführungsform kann in das Durchgangsloch des Grundkörpers eine Führungshülse einsetzbar sein, wobei die Führungshülse unterschiedliche Innendurchmesser d2 aufweisen kann, so dass ein Werkzeugschaft oder eine Werkzeugspitze unterschiedlichen Durchmessers >=d2 ausrichtbar einsetzbar sind. Die Führungshülse kann in die Ausrichtungsvorrichtung beispielsweise geschraubt, geklemmt oder geklebt werden. Es ist auch denkbar, dass die Führungshülse frei drehbar im Grundkörper gelagert ist, und die Drehbewegung des Drehwerkzeugs nachführt. Durch verschieden einsetzbare Führungshülsen ist eine exakte Lage des Drehwerkzeugs in der Ausrichtungsvorrichtung auch bei verschiedenen Werkzeugdurchmessern gegeben und die Ausrichtungsvorrichtung kann flexibel und universell für unterschiedliche Werkzeugdurchmesser eingesetzt werden.

In einer vorteilhaften Ausführungsform kann die Signaleinrichtung auf der Oberseite des Grundkörpers angeordnet und als optischer, haptischer und / oder als akustischer Signalgeber, bevorzugt als LED-Signalgeber ausgebildet sein. Von dieser Seite ist die Signaleinrichtung optimal für eine Bedienperson während der Bedienung des Drehwerkzeugs sichtbar. Ebenso kann die Signaleinrichtung auf einer seitlichen Position am Grundkörper angebracht sein oder über ein Verbindungskabel oder drahtlos an eine Bedienposition übertragen werden, falls die Ausrichtungsvorrichtung während der Bedienung durch eine Bedienperson nicht einsehbar ist. So ist denkbar, über eine elektrische Verbindungsleitung ein akustisches oder optisches Signal an einen Bediener auch unter schwierigen akustischen oder optischen Verhältnissen weiterzuleiten.

Gegenstand der Erfindung ist weiterhin ein Verfahren zum Ausrichten einer Bohrung oder Senkung oder zum Ausrichten eines Nachbearbeitungsschrittes mit einer erfindungsgemäßen Ausrichtungsvorrichtung.

Es wird vorgeschlagen, dass das Verfahren die folgenden Schritte umfasst:
- Aufschieben der Ausrichtungsvorrichtung auf einem Werkzeugschaft (14) eines Drehwerkzeugs;
- Aufsetzen des Drehwerkzeugs auf eine Oberfläche eines Werkstücks in einem angestrebten Winkel α zum Werkstück;
- Anpressen der Ausrichtungsvorrichtung auf die Oberfläche des Werkstücks, sodass ein mechanischer Kontakt zwischen allen Tastelementen und der Oberfläche des Werkstücks hergestellt wird;
- Leichtes Kippen oder Verdrehen des Drehwerkzeugs, bis die Signaleinrichtung ein Ausrichtsignal ausgibt;
- Durchführen bzw. Nachbearbeiten der Bohrung oder Senkung in dieser Position.

Dies erlaubt die Ausrichtung von Bohrungen, Senkungen oder dergleichen auf ebenen und gekrümmten Oberflächen in sehr einfachen, intuitiv erlernbaren und fehlersicheren Arbeitsweise.

Die einzelnen Merkmale können selbstverständlich untereinander kombiniert werden, wobei sich weitere vorteilhafte Wirkungen einstellen können, die über die Summe der Einzelwirkungen hinausgehen.

### ZEICHNUNGEN

Weitere Vorteile ergeben sich aus den vorliegenden Zeichnungsbeschreibungen. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: eine Außenansicht einer Ausführungsform einer erfindungsgemäßen Ausrichtungsvorrichtung;
- **Fig. 2**: eine Draufsicht einer Ausführungsform einer erfindungsgemäßen Ausrichtungsvorrichtung nach Fig. 1 ohne Abdeckung des Grundkörpers;
- **Fig. 3**: eine Drahtgitterdarstellung einer Seitenansicht einer Ausführungsform nach Fig. 1 mit eingesetzter Führungshülse;
- **Fig. 4**: eine Drahtgitterdarstellung eines Längsschnittes einer Ausführungsform sowie Querschnittes durch den Grundkörper nach Fig. 1;
- **Fig. 5**: eine Außenansicht einer weiteren Ausführungsform einer erfindungsgemäßen Ausrichtungsvorrichtung;
- **Fig. 6**: eine Draufsicht einer Ausführungsform einer erfindungsgemäßen Ausrichtungsvorrichtung nach Fig. 5 ohne Abdeckung des Grundkörpers;
- **Fig. 7**: eine Drahtgitterdarstellung eines Längsschnittes einer Ausführungsform sowie Querschnittes durch den Grundkörper nach Fig. 1 im aufgesetzten Zustand auf einem Werkstück;
- **Fig. 8**: eine Außenansicht einer weiteren Ausführungsform einer erfindungsgemäßen Ausrichtungsvorrichtung im aufgesetzten Zustand auf einem Werkstück;
- **Fig. 9**: eine schematische Darstellung der Elemente der Reihenschaltung in einer Ausführungsform einer erfindungsgemäßen Ausrichtungsvorrichtung;
- **Fig. 10**: zwei Reihenschaltungen zur Verwendung in einer Ausführungsform einer erfindungsgemäßen Ausrichtungsvorrichtung.

In den Figuren sind gleiche oder gleichartige Komponenten mit gleichen Bezugszeichen beziffert.

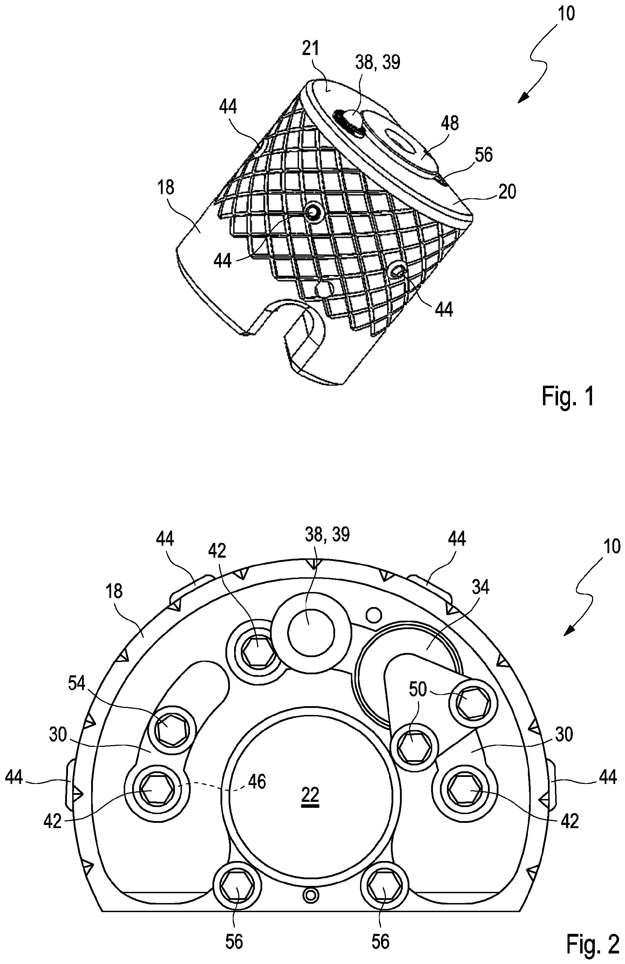

Fig. 1 zeigt eine dreidimensionale Darstellung einer Ausführungsform einer Ausrichtungsvorrichtung 10. In der Außenansicht sind der Grundkörper 18, die Abdeckung 20 des Grundkörpers 18, die Signaleinrichtung 38, die Arretierschrauben 44 sowie eine Führungshülse 48 zum Einsatz eines Werkzeugschaftes (nicht dargestellt) sichtbar. Der Grundkörper 18 hat einen teilkreisförmigen Querschnitt, wobei an einer Seite eine Abflachung ausgebildet ist. Dadurch kann die Ausrichtungsvorrichtung 10 auch in Eckbereichen bzw. Randbereichen eines Werkstücks mit einer angrenzenden Wand oder Stufe eingesetzt werden, wobei auch Bereiche nahe der angrenzenden Wand bearbeitet werde können. Der Grundkörper 18 weist Aussparungen auf der dem Werkstück zugewandten Seite auf. Dadurch kann eine Abfuhr von Späne oder Schmiermittel während des Rotierens eines eingesetzten Werkzeugs gewährleistet werden. Die Oberfläche des Grundkörpers 18 ist strukturiert ausgebildet, um die Montage an einem Werkzeugschaft 14 zu erleichtern. Auf der Abdeckung 20 ist die Signaleinrichtung 38 in Form eines LED-Signalgebers 39 angebracht, die ein Ausrichtsignal abgeben kann. Die Arretierschrauben 44 dienen der Fixierung der Kontaktjustierschrauben (nicht sichtbar) zur Einstellung der Sensibilität des Schaltpunktes.

Eine Draufsicht ohne Abdeckung 20 des Grundkörpers 18 der Ausführungsform aus Fig. 1 zeigt Fig. 2. Ergänzend sind in dieser Draufsicht die Fixierschrauben 56 für die Abdeckung 20 sowie die Signaleinrichtung 38 dargestellt. Im Innern des Grundkörpers 18 sind die Schraubenkontaktbleche 30 in einer Draufsicht, die Schraubenköpfe der Kontaktjustierschrauben 42 sowie die Schraubenköpfe der Fixierschrauben 54 der Schraubenkontaktbleche 30 sichtbar. Die Ausrichtungsvorrichtung 10 besitzt zwei getrennte Schraubenkontaktbleche 30, wobei in einem Schraubenkontaktblech 30 zwei Kontaktjustierschrauben 42 angebracht sind. Mit diesem Schraubenkontaktblech 30 steht ebenso die elektrische Stromquelle 34 in Kontakt, die mit den Fixierschrauben 50 montiert ist. Weiterhin ist mit diesem Schraubenkontaktbleche 30 die Signaleinrichtung 38 kontaktiert. Außerhalb des Grundkörpers 18 sind die Arretierschrauben 44 in einer Seitenansicht sichtbar, welche die Kontaktjustierschrauben 42 in einer gewissen Lage arretieren. Im Innern des Grundkörpers 18 ist ein Durchgangsloch 22 zur Durchführung einer Führungshülse oder zum direkten Einsatz eines Werkzeugs vorgesehen.

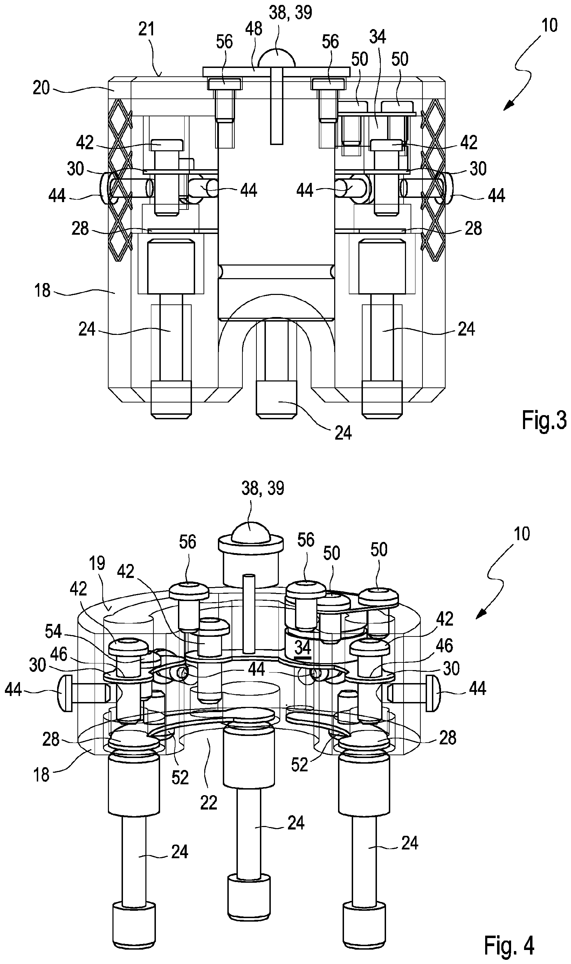

Fig. 3 zeigt eine Drahtgitterdarstellung einer Ausführungsform nach Fig. 1. Dargestellt ist eine Seitenansicht der Ausrichtungsvorrichtung 10 von der Seite des abgeflachten Grundkörpers 18, der den Teilkreis ausbildet. Die Tastelemente 24 überragen an der Unterseite den Grundkörper 18, wobei die Tastelemente 24 in vertikaler Richtung hin zu einer Werkstückoberfläche verschieblich gelagert sind, sodass ein Kontakt zwischen Tastelemente 24, Federkontaktblech 28 und Kontaktjustierschraube 42 möglich ist. Die Federkontaktbleche 28 sind parallel versetzt zu den Schraubenkontaktblechen 30 angeordnet, wobei die Kontaktjustierschrauben 42 durch die Schraubenkontaktbleche 30 hindurchgesteckt oder eingeschraubt werden. Der Kontakt der Kontaktjustierschrauben 42 zu den Federkontaktblechen 28 erfolgt durch ein vertikales Verschieben der Tastelemente 24, wobei die Federkontaktbleche 28 an die Kontaktjustierschrauben 42 gerückt werden. Über den Kontakt zwischen Werkstück (nicht dargestellt), Tastelemente 24, Federkontaktblech 28, Kontaktjustierschraube 42 und Schraubenkontaktblech 30 wird der Stromkreis geschlossen. Aufgrund dessen sind die Federkontaktbleche 28 und Schraubenkontaktbleche 30 mehrteilig ausgebildet, um eine schaltbare Verbindung zwischen den einzelnen Segmentabschnitten auszubilden.

Eine detaillierte Darstellung des inneren Aufbaus der Ausrichtungsvorrichtung 10 zeigt Fig. 4. Die Kontaktjustierschrauben 42 sind über Aussparungen im Innern des Grundkörpers 18 von der Oberseite zugänglich, und können von dort in die Schraubenkontaktbleche 30 eingesetzt werden. Von der Außenseite des Grundkörpers 18 können die Kontaktjustierschrauben 42 mit jeweils einer zugehörigen Arretierschraube 44 in einer gewünschten vertikalen Lage fixiert werden, um eine Ausrichtungsrichtung gegenüber der Normalen einer Werkstückoberfläche festzulegen. Sind alle Schaltpunkte identisch, wird die Spanbearbeitung exakt in den Normalen durchgeführt. Über diese vertikale Lage wird die Sensibilität der Ausrichtungsvorrichtung 10, d.h. der Schaltpunkt, ab wann der Stromkreis 36 geschlossen wird, bestimmt. Somit kann die Ausrichtungsvorrichtung 10 für einen bestimmten Anpressdruck einer Bedienperson angepasst werden. Das mittlere Tastelement 24 ist nicht in einer Wirkungslinie mit der zugehörigen Kontaktjustierschraube 42 angeordnet, die beiden anderen Tastelemente 24 liegen in einer Ebene mit der zugehörigen Kontaktjustierschraube 42. Die Signaleinrichtung 38 ist mit einem Schraubenkontaktblech 30 leitend verbunden. In dieser Ansicht sind ebenso die Fixierschrauben 50 der elektrische Stromquelle 34 sowie die Fixierschrauben 56 der Abdeckung (nicht dargestellt) abgebildet.

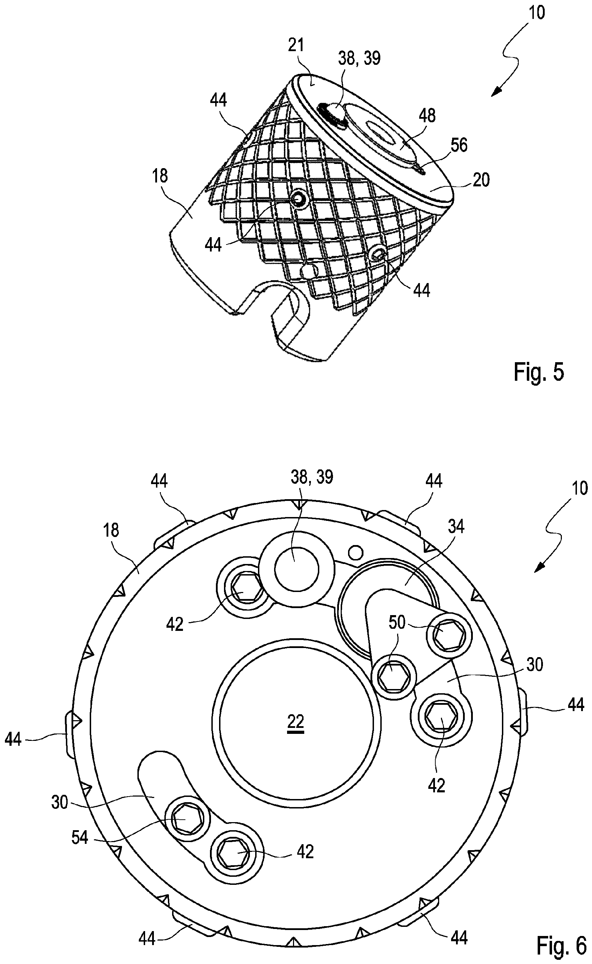

Fig. 5 zeigt eine weitere Ausführungsform einer Ausrichtungsvorrichtung 10. Der Grundkörper 18 hat einen kreisförmigen Querschnitt und eignet sich somit für eine Bearbeitung von baulich nicht beschränkten Werkstückoberflächen. In den übrigen Ausführungen entspricht diese Darstellung der aus Fig. 1.

In Fig. 6 ist eine Draufsicht auf eine Ausführungsform aus Fig. 5 ohne Abdeckung 20 des Grundkörpers 18 dargestellt. Der Grundkörper 18 weist einen kreisförmigen Querschnitt auf, wobei die Kontaktjustierschrauben 42 auf jeweils ein Drittel des Kreisumfangs angeordnet sind. In der Darstellung sind die Schraubenkontaktbleche 30 sichtbar, die Federkontaktbleche 28 sind in einer parallel versetzten Ebene unterhalb der Schraubenkontaktbleche 30 angeordnet und in dieser Ansicht nicht dargestellt. Ein Schraubenkontaktblech 30 stellt eine leitende Verbindung zwischen zwei Kontaktjustierschrauben 42, der elektrischen Stromquelle 34 und der Signaleinrichtung 38 her. Die elektrische Stromquelle 34 ist über die Fixierschrauben 50 an dem Grundkörper 18 angebracht. Das weitere Schraubenkontaktblech 30 ist über eine Fixierschraube 54 an dem Grundkörper 18 angebracht. Die Arretierschrauben 44 dienen dazu, die Kontaktjustierschrauben 42 in einer gewünschten Lage zu fixieren.

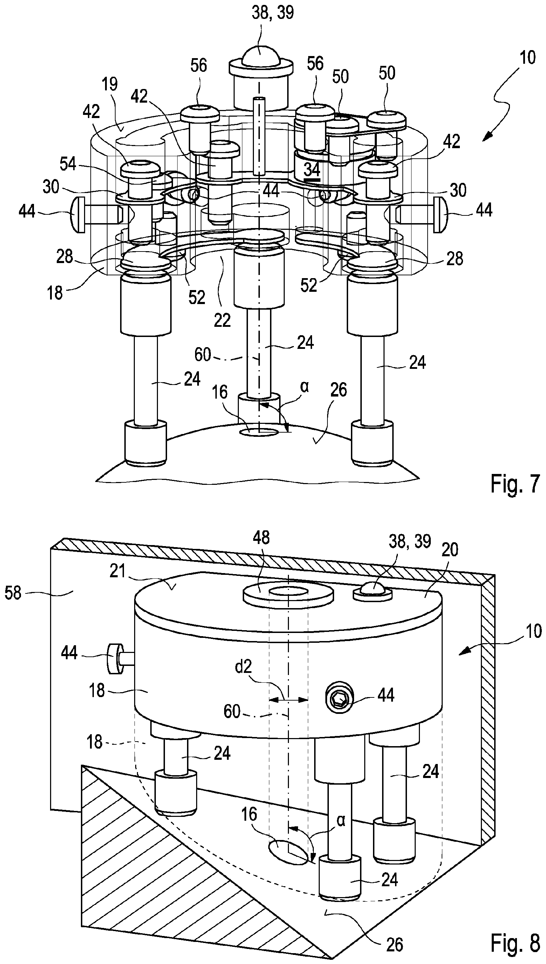

Die Figs. 7 und 8 zeigen jeweils eine weitere Ausführungsform einer Ausrichtungsvorrichtung 10 im abgestützten Zustand auf einer Oberfläche 26 eines Werkstücks. Das Werkstück in Fig. 7 weist eine gewölbte Oberfläche 26 auf, in Fig. 8 ist eine schräge Oberfläche 26 dargestellt. Im Fall der Fig. 7 soll die Bohrung, die Senkung oder die Nachbearbeitung in einer Richtung orthogonal zu einer Tangente der Oberfläche 26 erfolgen. Im Falle von Fig. 8 soll die Bearbeitung unter einem Winkel α > 90° erfolgen, sodass beispielsweise die Bohrung nicht orthogonal zur Oberfläche 26, sondern in einem Winkel α > 90° zur Oberfläche 26 erfolgen kann.

Fig. 7 zeigt eine Ausführungsform einer Ausrichtungsvorrichtung 10 nach Fig. 1. Die Darstellung der Ausrichtungsvorrichtung 10 ist vergleichbar zu Fig. 4 in einer Drahtgitterdarstellung, wobei der Grundkörper nur im oberen Bereich dargestellt ist. Das Werkstück 16 weist eine gewölbte Oberfläche 26 auf, auf der eine Bohrung 16 in orthogonaler Richtung, gekennzeichnet durch die Normale 60, zu einer Tangente auf der Oberfläche 26 des Werkstücks eingebracht werden kann, d.h. in einem Winkel α = 90°. Die Tastelemente 24 weisen dazu alle eine identische Länge auf, sodass bei Kontakt der Tastelemente 24 mit der Oberfläche 26 des Werkstücks diese orthogonale Richtung dann erreicht wird, wenn ein Ausrichtsignal von der Signaleinrichtung 38 in Form eines LED-Signalgebers 39 ausgeht.

In Fig. 8 soll eine Bohrung in einer Richtung α > 90° bezüglich der Oberfläche des Werkstücks 26 eingebracht werden. Die Ausrichtungsvorrichtung 10 ist im oberen Bereich als Außenansicht und im Bereich der Tastelemente 24 ohne den Grundkörper 18 dargestellt. Die Tastelemente 24 weisen dafür verschiedene Längen auf, wobei in der vorliegenden Ausführungsform ein Tastelement 24 kürzer ausgebildet ist. Es bietet sich an, ein einfaches Auswechseln der Tastelemente 24 z.B. durch ein Schraubgewinde vorzusehen, um unterschiedlich lange Tastelemente 24 in den Grundkörper 18 bevorzugt Werkzeugfrei einschrauben zu können. Alternativ können die Tastelemente 24 gleichlang ausgebildet sein, allerdings der Schaltpunkt, d.h. der Eintauchweg der Tastelemente 24, ab der eine elektrische Kontaktierung zwischen Federkontaktblech 28 und Kontaktjustierschraube 42, kann durch ein axiales Verstellen der Position der Kontaktjustierschraube 42 im Grundkörper 18, unterschiedlich sein. Dies bietet sich besonders an, wenn eine Reihe von Bohrungen 16, Senkungen 17 oder sonstiger Nachbearbeitungen in der Nähe einer Begrenzungswand 58 oder sonstigen räumlichen Begrenzung einer Oberfläche 26 eines Werkstücks erfolgen sollen. Es bietet sich an, den Grundkörper 18 der Ausrichtungsvorrichtung 10 an einer Seite so abzuflachen, dass in Kombination mit der Anordnung der unterschiedlichen Längen der Tastelemente 24 die gewünschte Bearbeitungsrichtung erzielt werden kann. Die Ausrichtungsvorrichtung 10 sollte dafür bei jedem Bearbeitungsschritt mit der Begrenzungswand 58 mit der abgeflachten Seite in Kontakt stehen, wobei gleichzeitig die Signaleinrichtung 38 ein Ausrichtsignal anzeigen sollte. Dann kann in der gewünschten Bearbeitungsrichtung unter einem Winkel α eine Bearbeitung erfolgen.

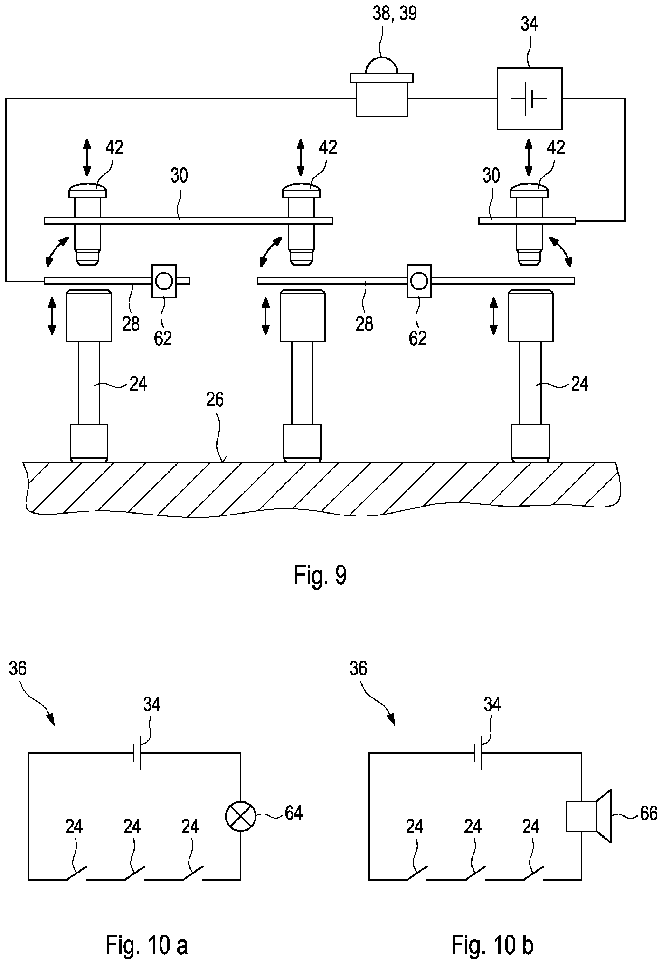

Die Figs. 9 und 10 zeigen schematische die Komponenten einer Reihenschaltung in Ausführungsform einer erfindungsgemäßen Ausrichtungsvorrichtung.

Dafür sind in Fig. 9 lediglich die Tastelemente 24, die Federkontaktbleche 28 und die Schraubenkontaktbleche 30, die Kontaktjustierschrauben 42 sowie die Signaleinrichtung 38 dargestellt. Über eine Bewegung durch eine Bedienperson werden die Kontaktjustierschrauben 42 sowie die Federkontaktbleche 28 und die Schraubenkontaktbleche 30 gegen die Tastelemente 24 gedrückt (dargestellt durch die Pfeile), wobei die Tastelemente 24 auf einer Oberfläche 26 eines Werkstücks auftreffen und in einer weiteren vertikalen Bewegung begrenzt werden. Dadurch erfolgt ein Kontakt zwischen den Kontaktjustierschrauben 42, dem Federkontaktblech 28 und den Tastelementen 24, wodurch in Verbindung mit dem Schraubenkontaktblech 30 und der Oberfläche 26 des Werkstücks der Stromkreis 36 geschlossen wird.

Fig. 10 zeigt den elektrotechnischen Aufbau einer derartigen Reihenschaltung mit drei Tastelementen und einem optischen Signalgeber 64, Fig. 10a. sowie einem akustischen Signalgeber 66, Fig. 10b. Die Schaltung kommt ohne komplexe Bauteile aus und ist somit robust und leicht einsetzbar.

### Bezugszeichenliste

- 10: Ausrichtungsvorrichtung
- 14: Werkzeugschaft
- 16: Bohrung
- 17: Senkung
- 18: Grundkörper
- 19: Oberseite des Grundkörpers
- 20: Abdeckung des Grundkörpers
- 21: Oberseite der Abdeckung
- 22: Durchgangsloch
- 24: Tastelemente
- 26: Oberfläche des Werkstücks
- 28: Federkontaktblech
- 30: Schraubenkontaktblech
- 34: elektrische Stromquelle
- 36: Stromkreis
- 38: Signaleinrichtung
- 39: LED-Signalgeber
- 42: Kontaktjustierschraube
- 44: Arretierschraube
- 46: Bohrung des Schraubenkontaktblechs
- 48: Führungshülse
- 50: Fixierschraube für Batterie
- 52: Fixierschraube für erstes Kontaktblech
- 54: Fixierschraube für zweites Kontaktblech
- 56: Fixierschraube für Abdeckung des Grundkörpers
- 58: Begrenzungswand
- 60: Normale auf der Oberfläche des Werkstücks
- 62: Federkontaktlager
- 64: optischer Signalgeber
- 66: akustischer Signalgeber

## Patentansprüche

1. Ausrichtungsvorrichtung (10) zur Anordnung an einem Drehwerkzeug, insbesondere an einem Werkzeugschaft (14) oder einer Werkzeugspitze eines Dreh-, Fräs-, Reib- oder Senkwerkzeugs, zum Ausrichten einer einzubringenden Bohrung (16) oder Senkung (17) oder zum Ausrichten eines Nachbearbeitungsschrittes gegenüber einer Normalen (60) der Oberfläche eines Werkstücks (26), umfassend einen Grundkörper (18) mit einem Durchgangsloch (22) zur Aufnahme des Werkzeugschafts (14) oder der Werkzeugspitze in einer Ausrichtungsrichtung und mindestens zwei, bevorzugt mindestens drei Tastelemente (24) zur ausgerichteten Auflage auf der Oberfläche des Werkstücks (26), wobei durch eine Ausrichtbewegung der Ausrichtungsvorrichtung (10) bezüglich der Normalen (60) der Oberfläche des Werkstücks (26) alle Tastelemente (24) einen Stromkreis (36) zwischen einer im Grundkörper (18) umfassten elektrischen Stromquelle (34) und einer Signaleinrichtung (38) ausbilden, der durch eine von den Tastelementen (24) aktivierte Reihenschaltung geschlossen wird, um durch den geschlossenen Stromkreis (36) die Signaleinrichtung (38) zu aktivieren, so dass bei mechanischem Kontakt aller Tastelemente (24) mit der Oberfläche des Werkstücks (26) eine einzelne Signaleinrichtung (38) aktiviert und ein einzelnes Ausrichtsignal ausgegeben wird, **dadurch gekennzeichnet, dass** ein elektrischer Schaltpunkt zumindest eines Tastelements (24) in Auflagerichtung hin zur Oberfläche des Werkstücks (26) relativ zur Oberfläche des Werkstücks (26) mittels einer Kontaktjustierschraube (42) verschraubbar oder verschiebbar und damit lageverstellbar ist, so dass die Ausrichtungsrichtung bezüglich der Normalen (60) einer Oberfläche eines Werkstücks (26) einstellbar ist.

2. Ausrichtungsvorrichtung (10) nach Anspruch 1, **dadurch gekennzeichnet, dass** alle Tastelemente (24) einen definierten Schaltpunkt haben, der gleichzeitig Anschlagspunkt der Tastelemente (24) ist.

3. Ausrichtungsvorrichtung (10) nach einem der Ansprüche 1 oder 2, **dadurch gekennzeichnet, dass** zumindest ein mit zumindest einem Tastelement (24) mechanisch kontaktierbares Federkontaktblech (28) über die Kontaktjustierschraube (42) mit einem Schraubenkontaktblech (30) elektrisch kontaktierbar ist.

4. Ausrichtungsvorrichtung (10) nach Anspruch 3, **dadurch gekennzeichnet, dass** die Kontaktjustierschraube (42) von der Oberseite (19) des Grundkörpers (18) zugänglich und einstellbar und in Ausrichtungsrichtung im Grundkörper (18) angeordnet ist.

5. Ausrichtungsvorrichtung (10) nach einem der vorhergehenden Ansprüche 3 oder 4, **dadurch gekennzeichnet, dass** zumindest zwei Kontaktjustierschrauben (42) über ein gemeinsames Federkontaktblech (28) elektrisch verbindbar sind und zumindest zwei Kontaktjustierschrauben (42) über ein Schraubenkontaktblech (30) elektrisch miteinander verbunden sind.

6. Ausrichtungsvorrichtung (10) nach einem der Ansprüche 3 bis 5, **dadurch gekennzeichnet, dass** das mindestens eine Federkontaktblech (28) parallel zu dem mindestens einen Schraubenkontaktblech (30) im Grundkörper (18) angeordnet ist, wobei das Schraubenkontaktblech (30) mit dem Federkontaktblech (28) über mindestens ein Kontaktjustierschraube (42) durch eine, durch das Tastelement (24) ausgelöste, Federbewegung elektrisch kontaktierbar ist.

7. Ausrichtungsvorrichtung (10) nach einem der Ansprüche 3 bis 6, **dadurch gekennzeichnet, dass** die elektrische Stromquelle (34) und / oder die Signaleinrichtung (38) in elektrischem Kontakt mit dem mindestens einen Federkontaktblech (28) und / oder mindestens einem Schraubenkontaktblech (30) steht.

8. Ausrichtungsvorrichtung (10) nach einem der Ansprüche 3 bis 7, **dadurch gekennzeichnet, dass** das mindestens eine Schraubenkontaktblech (30) Bohrungen (46) aufweist, in welche die Kontaktjustierschraube (42) einsteckbar, einlötbar oder einschraubbar ist, wodurch eine permanentleitende Verbindung zwischen dem Schraubenkontaktblech (30) und der Kontaktjustierschraube (42) hergestellt ist.

9. Ausrichtungsvorrichtung (10) nach einem der vorhergehenden Ansprüche, **dadurch gekennzeichnet, dass** zumindest eine Kontaktjustierschraube (42) über eine Arretierschraube (44) lagegesichert werden kann.

10. Ausrichtungsvorrichtung (10) nach einem der vorhergehenden Ansprüche, **dadurch gekennzeichnet, dass** die mindestens zwei Tastelemente (24), bevorzugt mindestens drei Tastelemente (24) die gleiche Länge L aufweisen.

11. Ausrichtungsvorrichtung (10) nach einem der vorhergehenden Ansprüche, **dadurch gekennzeichnet, dass** der Grundkörper (18) kreiszylinderförmig oder teilkreiszylinderförmig ausgebildet ist.

12. Ausrichtungsvorrichtung (10) nach einem der vorhergehenden Ansprüche, **dadurch gekennzeichnet, dass** in das Durchgangsloch (22) des Grundkörpers (18) eine Führungshülse (48) einsetzbar ist, wobei die Führungshülse (48) unterschiedliche Innendurchmesser d2 aufweisen kann, so dass ein Werkzeugschaft (14) oder eine Werkzeugspitze unterschiedlichen Durchmessers ausrichtbar einsetzbar sind.

13. Ausrichtungsvorrichtung (10) nach einem der vorhergehenden Ansprüche, **dadurch gekennzeichnet, dass** die Signaleinrichtung (38) auf der Oberseite (19) des Grundkörpers (18) angeordnet und als optischer, haptischer und / oder als akustischer Signalgeber, bevorzugt als LED-Signalgeber (39) ausgebildet ist.

14. Verfahren zum Ausrichten einer Bohrung (16) oder Senkung (17) oder zum Ausrichten eines Nachbearbeitungsschrittes mit einer Ausrichtungsvorrichtung (10) nach einem der vorgenannten Ansprüche, umfassend die folgenden Schritte:
- Aufschieben der Ausrichtungsvorrichtung (10) auf einem Werkzeugschaft (14) eines Drehwerkzeugs;
- Aufsetzen des Drehwerkzeugs auf eine Oberfläche eines Werkstücks (26) in einem angestrebten Winkel α zum Werkstück;
- Anpressen der Ausrichtungsvorrichtung (10) auf die Oberfläche des Werkstücks (26), sodass ein mechanischer Kontakt zwischen allen Tastelementen (24) und der Oberfläche des Werkstücks (26) hergestellt wird;
- Leichtes Kippen oder Verdrehen des Drehwerkzeugs, bis die Signaleinrichtung (38) ein Ausrichtsignal ausgibt;
- Durchführen bzw. Nachbearbeiten der Bohrung (16) oder Senkung (17) in dieser Position.

## Claims

1. Alignment device (10) for the arrangement on a turning tool, in particular on a tool shank (14) or a tool tip of a turning, milling, reaming or countersinking tool, for aligning a borehole (16) or counterbore (17) to be realized or for aligning a finishing step with respect to a normal (60) of the surface of a workpiece (26), comprising a base body (18) with a through-hole (22) for receiving the tool shank (14) or the tool tip in an alignment direction and at least two, preferably at least three feeler elements (24) for aligned resting on the surface of the workpiece (26), wherein an alignment movement of the alignment device (10) with respect to the normal (60) of the surface of the workpiece (26) causes all the feeler elements (24) to form an electric circuit (36) between an electric power source (34) included in the base body (18) and a signal device (38), which is closed by a series connection activated by the feeler elements (24), in order to activate the signal device (38) via the closed electric circuit (36), so that by mechanical contact of all feeler elements (24) with the surface of the workpiece (26), a single signal device (38) is activated and a single alignment signal is output, **characterized in that** an electrical switching point of at least one feeler element (24) can be screwed or displaced in the resting direction towards the surface of the workpiece (26) relative to the surface of the workpiece (26) by means of a contact adjusting screw (42) and can thus be adjusted in position, so that the alignment direction is adjustable with respect to the normal (60) of a surface of a workpiece (26).

2. Alignment device (10) according to claim 1, **characterized in that** all feeler elements (24) have a defined switching point which is simultaneously the abutment point of the feeler elements (24).

3. Alignment device (10) according to one of claims 1 or 2, **characterized in that** at least one spring contact sheet (28), which is mechanically contactable with at least one feeler element (24), is electrically contactable with a screw contact sheet (30) via the contact adjusting screw (42).

4. Alignment device (10) according to claim 3, **characterized in that** the contact adjusting screw (42) is accessible and adjustable from the upper side (19) of the base body (18) and is arranged in the alignment direction in the base body (18).

5. Alignment device (10) according to one of the preceding claims 3 or 4, **characterized in that** at least two contact adjusting screws (42) are electrically connectable via a common spring contact sheet (28) and at least two contact adjusting screws (42) are electrically connected to each other via a screw contact sheet (30).

6. Alignment device (10) according to one of claims 3 to 5, **characterized in that** the at least one spring contact sheet (28) is arranged in the base body (18) parallel to the at least one screw contact sheet (30), wherein the screw contact sheet (30) is electrically contactable with the spring contact sheet (28) via at least one contact adjusting screw (42) by a spring movement triggered by the feeler element (24).

7. Alignment device (10) according to one of claims 3 to 6, **characterized in that** the electric power source (34) and/or the signal device (38) is/are in electrical contact with the at least one spring contact sheet (28) and/or the at least one screw contact sheet (28).

8. Alignment device (10) according to one of claims 3 to 7, **characterized in that** the at least one screw contact sheet (30) has boreholes (46) into which the contact adjusting screw (42) can be inserted, soldered or screwed, whereby a permanently conductive connection is produced between the screw contact sheet (30) and the contact adjusting screw (42).

9. Alignment device (10) according to one of the preceding claims, **characterized in that** at least one contact adjusting screw (42) can be secured in position by means of a locking screw (44).

10. Alignment device (10) according to one of the preceding claims, **characterized in that** the at least two feeler elements (24), preferably at least three feeler elements (24), have the same length L.

11. Alignment device (10) according to one of the preceding claims, **characterized in that** the base body (18) is designed in the shape of a circular cylinder or a partial circular cylinder.

12. Alignment device (10) according to one of the preceding claims, **characterized in that** a guide sleeve (48) can be inserted into the through-hole (22) of the base body (18), wherein the guide sleeve (48) can have different internal diameters d2, so that a tool shank (14) or a tool tip of different diameter can be inserted in an alignable fashion.

13. Alignment device (10) according to one of the preceding claims, **characterized in that** the signal device (38) is arranged on the upper side (19) of the base body (18) and is embodied as an optical, haptic and/or acoustic signal transmitter, preferably an LED signal transmitter (39).

14. Method for aligning a borehole (16) or counterbore (17) or for aligning a finishing step with an alignment device (10) according to one of the preceding claims, comprising the following steps of:
- sliding the alignment device (10) onto a tool shank (14) of a turning tool;
- placing the turning tool onto a surface of a workpiece (26) at a desired angle α to the workpiece;
- pressing the alignment device (10) onto the surface of the workpiece (26) so that a mechanical contact is produced between all the feeler elements (24) and the surface of the workpiece (26);
- slightly tilting or rotating the turning tool until the signal device (38) outputs an alignment signal;
- realizing or finishing the borehole (16) or counterbore (17) in this position.

## Revendications

1. Dispositif d'alignement (10) destiné à être disposé sur un outil de tournage, en particulier sur une tige d'outil (14) ou une pointe d'outil d'un outil de tournage, de fraisage, de frottement ou de fraisurage, pour l'alignement d'un perçage (16) ou d'un contre-perçage (17) à réaliser ou pour l'alignement d'une étape de finition par rapport à une normale (60) de la surface d'une pièce (26), comprenant un corps de base (18) avec un trou traversant (22) pour recevoir la tige d'outil (14) ou la pointe d'outil dans une direction d'alignement et au moins deux, de préférence au moins trois éléments palpeurs (24) pour un appui aligné sur la surface de la pièce (26), dans lequel un mouvement d'alignement du dispositif d'alignement (10) par rapport à la normale (60) de la surface de la pièce (26) amène tous les éléments palpeurs (24) à former un circuit électrique (36) entre une source d'énergie électrique (34) incluse dans le corps de base (18) et un dispositif à signaux (38), qui est fermé par un montage en série activé par les éléments palpeurs (24), afin d'activer le dispositif à signaux (38) par l'intermédiaire du circuit électrique fermé (36), de sorte que par contact mécanique de tous les éléments palpeurs (24) avec la surface de la pièce (26), un seul dispositif à signaux (38) est activé et un seul signal d'alignement est émis, **caractérisé en ce qu'**un point de commutation électrique d'au moins un élément palpeur (24) peut être vissé ou déplacé dans la direction d'appui vers la surface de la pièce (26) par rapport à la surface de la pièce (26) au moyen d'une vis de réglage de contact (42) et peut ainsi être réglé en position, de sorte que la direction d'alignement par rapport à la normale (60) d'une surface d'une pièce (26) est réglable.

2. Dispositif d'alignement (10) selon la revendication 1, **caractérisé en ce que** tous les éléments palpeurs (24) ont un point de commutation défini qui est simultanément le point d'appui des éléments palpeurs (24).

3. Dispositif d'alignement (10) selon l'une des revendications 1 ou 2, **caractérisé en ce qu'**au moins une tôle de contact à ressort (28), qui peut être contactée mécaniquement à au moins un élément palpeur (24), peut être mise en contact électrique avec une tôle de contact à vis (30) par l'intermédiaire de la vis de réglage de contact (42).

4. Dispositif d'alignement (10) selon la revendication 3, **caractérisé en ce que** la vis de réglage de contact (42) est accessible et réglable depuis la face supérieure (19) du corps de base (18) et est disposée dans le sens de l'alignement dans le corps de base (18).

5. Dispositif d'alignement (10) selon l'une des revendications précédentes 3 ou 4, **caractérisé en ce qu'**au moins deux vis de réglage de contact (42) peuvent être reliées électriquement par une tôle de contact à ressort (28) commune et au moins deux vis de réglage de contact (42) sont reliées électriquement entre elles par une tôle de contact à vis (30).

6. Dispositif d'alignement (10) selon l'une des revendications 3 à 5, **caractérisé en ce que** la au moins une tôle de contact à ressort (28) est disposée dans le corps de base (18) parallèlement à la au moins une tôle de contact à vis (30), la tôle de contact à vis (30) pouvant être mise en contact électrique avec la tôle de contact à ressort (28) via au moins une vis de réglage de contact (42) par un mouvement de ressort provoqué par l'élément palpeur (24).

7. Dispositif d'alignement (10) selon l'une des revendications 3 à 6, **caractérisé en ce que** la source d'énergie électrique (34) et/ou le dispositif à signaux (38) est/sont en contact électrique avec la au moins une tôle de contact à ressort (28) et/ou la au moins une tôle de contact à vis (28).

8. Dispositif d'alignement (10) selon l'une des revendications 3 à 7, **caractérisé en ce que** la au moins une tôle de contact à vis (30) présente des perçages (46) dans lesquels la vis de réglage de contact (42) peut être insérée, soudée ou vissée, une liaison conductrice permanente étant établie entre la tôle de contact à vis (30) et la vis de réglage de contact (42).

9. Dispositif d'alignement (10) selon l'une des revendications précédentes, **caractérisé en ce qu'**au moins une vis de réglage de contact (42) peut être fixée en position au moyen d'une vis de serrage (44).

10. Dispositif d'alignement (10) selon l'une des revendications précédentes, **caractérisé en ce que** les au moins deux éléments palpeurs (24), de préférence au moins trois éléments palpeurs (24), ont la même longueur L.

11. Dispositif d'alignement (10) selon l'une des revendications précédentes, **caractérisé en ce que** le corps de base (18) est conçu sous la forme d'un cylindre circulaire ou d'un cylindre circulaire partiel.

12. Dispositif d'alignement (10) selon l'une des revendications précédentes, **caractérisé en ce qu'**une douille de guidage (48) peut être insérée dans le trou traversant (22) du corps de base (18), la douille de guidage (48) pouvant présenter différents diamètres intérieurs d2, de sorte qu'une tige d'outil (14) ou une pointe d'outil de diamètre différent peut être insérée de manière alignée.

13. Dispositif d'alignement (10) selon l'une des revendications précédentes, **caractérisé en ce que** le dispositif à signaux (38) est disposé sur la face supérieure (19) du corps de base (18) et est réalisé sous la forme d'un émetteur de signaux optiques, haptiques et/ou acoustiques, de préférence sous la forme d'un émetteur de signaux à DEL (39).

14. Procédé d'alignement d'un perçage (16) ou d'un contre-perçage (17) ou d'alignement d'une étape de finition avec un dispositif d'alignement (10) selon l'une des revendications précédentes, comprenant les étapes suivantes:
- glisser le dispositif d'alignement (10) sur une tige d'outil (14) d'un outil de tournage;
- placer l'outil de tournage sur une surface d'une pièce (26) à un angle α souhaité par rapport à la pièce;
- appuyer le dispositif d'alignement (10) sur la surface de la pièce (26) de manière à établir un contact mécanique entre tous les éléments de palpage (24) et la surface de la pièce (26) ;
- incliner ou tourer légèrement l'outil de tournage jusqu'à ce que le dispositif à signaux (38) émette un signal d'alignement ;
- réaliser ou finir le perçage (16) ou le contre-perçage (17) dans cette position.
